# EUROPÄISCHE PATENTANMELDUNG

(11) **EP 0 554 235 A1**
(43) Veröffentlichungstag der Anmeldung: **04.08.1993**
(21) Anmeldenummer: 93890002.4
(22) Anmeldetag: 11.01.1993
(51) Int. Cl.: F02B 25/14, F02F 1/42, F02B 27/02

(54) **Zweitakt-Brennkraftmaschine mit zumindest einem Ein- und Auslassventil je Zylinder**

(30) Priorität: 29.01.1992 AT 146/92
(71) Anmelder: AVL Gesellschaft für Verbrennungskraftmaschinen und Messtechnik mbH.Prof.Dr.Dr.h.c. Hans List, A-8020 Graz (AT)
(72) Erfinder: Glanz, Reinhard, Dipl.-Ing., A-8042 Graz (AT); Greier, Josef, Dipl.-Ing., A-8010 Graz (AT); Fachbach, Heinz, Dipl.-Ing. Dr., A-8010 Graz (AT)
(74) Vertreter: Krause, Walter, Dr. Dipl.-Ing.

(57) **Zusammenfassung**

Um in der Spülphase einer Zweitakt-Brennkraftmaschine mit zumindest einem Ein- und Auslaßventil (7 und 8) je Zylinder mit den zugehörigen Ein- und Auslaßkanälen (5 und 6) im Zylinderkopf (3) und Brennraumspülung durch Frischgaszufuhr, die direkte Frischgasströmung zwischen Einlaßventil (7) und Auslaßventil (8) zu unterbinden, ist der Eintrittswinkel (β) des Einlaßkanals (5) in dem Bereich (B) der Oberfläche (5') des Einlaßkanals (5), in dem diese dem Ventilsitzring (9) des Einlaßventils (7) zugewandt ist, größer ausgebildet als der Eintrittswinkel (α) des Einlaßkanales (5), in dem Bereich (A) der Oberfläche (5') des Einlaßkanals (5), in dem diese dem Ventilsitzring (9) des Einlaßventils (7) abgewandt ist, sodaß die Hauptströmungsrichtung (S₁) des Frischgases vom Auslaßventil (8) weg in Richtung Zylinderwand (1a) gelenkt wird.

## Beschreibung

Die Erfindung betrifft eine Zweitakt-Brennkraftmaschine mit zumindest einem parallel zur Zylinderachse angeordneten Ein- und Auslaßventil je Zylinder, mit den zugehörigen Ein- und Auslaßkanälen im Zylinderkopf und Brennraumspülung durch Frischgaszufuhr, wobei durch die Formgebung des Einlaßkanals eine vom Auslaßventil weg gerichtete Strömung im Brennraum erzeugt wird und der Eintrittskanal Bereiche unterschiedlicher Eintrittswinkel aufweist.

Bei derartigen Brennstoffkraftmaschinen ist man daran interessiert, die während der Überdeckungsphase der Öffnungszeiten von Ein- und Auslaßventilen durch Spülungsvorgänge entstehenden Kurzschlußverluste, das sind Verluste durch das Entweichen von Frischgas auf dem kürzesten Wege durch das Auslaßventil, so gering wie möglich zu halten. Das in dieser Phase eintretende Frischgas sollte den Brennraum erst verbrannt beim Ausstoßen der Abgase verlassen.

Aus der DE 40 12 492 A1 ist eine Zweitakt-Brennkraftmaschine der eingangs definierten Art bekannt, bei der zur Verringerung der Kurzschlußverluste strömungshindernde Formvorsprünge im Einlaßkanal, unmittelbar vor dem Brennraum, verwendet werden. Durch diese Strömungbarriere soll die Frischgasströmung umgelenkt und am direkten Ausströmen gehindert werden. Diese Verwendung von Strömungshindernissen hat allerdings den grundsätzlichen Nachteil, daß der Durchfluß durch die Einlaßöffnung behindert wird und dadurch Strömungsverluste entstehen.

Aufgabe der Erfindung ist es, diese Nachteile zu vermeiden, und eine Zweitakt-Brennkraftmaschine zu schaffen, bei der einerseits die Frischgasverluste während des Spülvorganges minimiert und andererseits die Durchflußverluste verringert werden.

Die erfindungsgemäße Lösung dieser Aufgabe besteht darin, daß der Eintrittswinkel des Einlaßkanals in einem der einlaßseitigen Begrenzungsebene des Ventilsitzringes zugewandten Bereich der Oberfläche des Einlaßkanals in an sich bekannter Weise größer ist als der Eintrittswinkel des Einlaßkanals in einem der einlaßseitigen Begrenzungsebene des Ventilsitzringes abgewandten Bereich der Oberfläche des Einlaßkanals, beide Winkel gemessen beim Ventilsitzring als Winkel zwischen der einlaßseitigen Begrenzungsebene des Ventilsitzringes und der Tangente auf die Oberfläche des Einlaßkanals, wobei die Hauptströmungsrichtung des Frischgases in Richtung zur Zylinderwand und von der Motorlängsebene weg gelenkt wird. Unter dem der einlaßseitigen Begrenzungsebene des Ventilsitzringes zugewandten Bereich der Oberfläche ist dabei jenes Oberflächensegment des Einlaßkanals zu verstehen, dessen Flächennormalen die Begrenzungsebene noch innerhalb des durch die Einlaßkanalwände gebildeten Hohlraumes schneiden. Der abgewandte Bereich der Oberfläche des Einlaßkanals ist dementsprechend jenes Oberflächensegment, dessen Flächennormalen die einlaßseitige Begrenzungsebene außerhalb des Hohlraumes schneiden.

Bei der Erfindung werden also allein durch Gestaltung eines strömungsgünstigen Eintrittsbereiches des Frischgases in den Brennraum in Richtung Zylinderwand und Kolben gerichtete Geschwindigkeitskomponenten erzeugt. Ein großer Teil des während der Spülphase in den Brennraum eintretenden Frischgases strömt dadurch entlang der Zylinderwand in Richtung Kolben, wobei Kurzschlußverluste weitgehend vermieden werden und zusätzliche durch die Umlenkung der Strömung hervorgerufene Verluste minimal bleiben.

Besonders günstig ist es, wenn der Eintrittswinkel des Einlaßkanals in dem Bereich der Oberfläche des Einlaßkanals, in dem diese dem Ventilsitzring abgewandt ist, zwischen 20° und 45°, vorzugsweise 30° beträgt, und der Eintrittswinkel des Einlaßkanals in dem Bereich der Oberfläche des Einlaßkanals, in dem diese dem Ventilsitzring des Einlaßventils zugewandt ist, zwischen 50° und 70°, vorzugsweise bei 60°, beträgt.

Es hat sich gezeigt, daß der Bereich der Oberfläche des Einlaßkanals, in dem diese dem Ventilsitzring abgewendet ist, als auch der Bereich der Oberfläche des Einlaßkanals, in dem diese dem Ventilsitzring des Einlaßventils zugewandt ist, beim Ventilsitzring einen Winkel um die Kanalmittellinie zwischen 90,° und 160° einnehmen kann, wobei die Bereiche auch verschieden groß sein können.

Der Übergang der Oberfläche des Einlaßkanals verläuft vorzugsweise in jedem Bereich stetig.

Bei Ausführungsformen der Erfindung mit zwei Einlaßventilen ist es vorteilhaft, wenn die Bereiche der Oberflächen der Einlaßkanäle zur Symmetrieebene, welche zwischen den Einlaßventilen im rechten Winkel zur Motorlängsachse verläuft, symmetrisch angeordnet sind.

Im folgenden wird die Erfindung an Hand der in den Zeichnungen dargestellten Ausführungsbeispiele näher erläutert. Es zeigen in schematischer Darstellung:
Fig.1 eine Ausführungsform der Erfindung im Längsschnitt durch einen Zylinder einschließlich Zylinderkopf nach der Linie I-I in Fig.2,
Fig.2 einen Schnitt nach der Linie II-II in Fig.1;
Fig.3 eine andere Ausführung gemäß der Erfindung mit zwei Einlaßventilen und einem Auslaßventil,
Fig.4 eine weitere Ausführungsvariante im Längsschnitt nach der Linie IV-IV in Fig.5 und
Fig. 5 dazu einen Schnitt nach der Linie V-V in Fig.4. In den Darstellungen sind funktionsgleiche Teile mit gleichen Bezugszeichen bezeichnet.

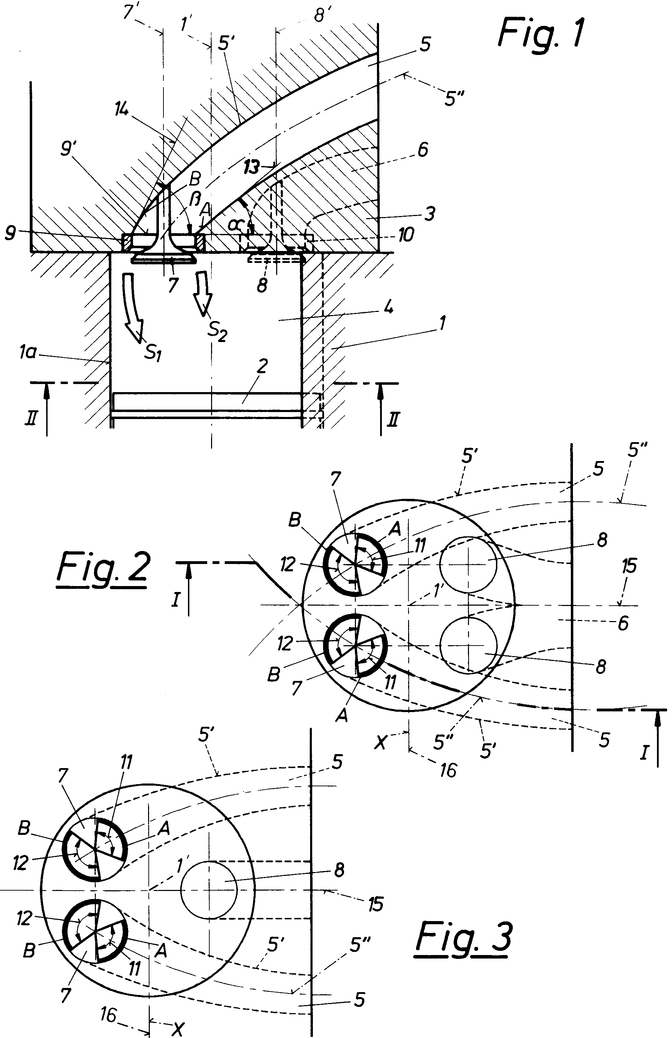

Bei der erfindungsgemäßen Ausführung nach den Fig.1 und 2 umfaßt die Brennkraftmaschine einen Zylinderblock 1, einen hin- und hergehenden Kolben 2, einen am Zylinderblock 1 befestigten Zylinderkopf 3, sowie einen zwischen Innenwand des Zylinders 1a und dem Boden des Kolbens 2 gebildeten Brennraum 4. Die im Zylinderkopf 3 enthaltenen Einlaßkanäle 5 sowie der Auslaßkanal 6 sind so konstruiert, daß sich die Flansche an derselben Zylinderkopfseite befinden. Sind mehrere Einlaßventile 7 bzw. Auslaßventile 8 vorhanden, so sind diese so angeordnet, daß die Verbindungsgeraden der Ventilmitten der Einlaßventile 7 bzw. die Verbindungsgeraden der Ventilmitten der Auslaßventile 8 vorzugsweise parallel zur Motorlängsachse X liegen.

In Fig. 2 ist weiters der Bereich A der Oberfläche 5' des Einlaßkanals 5, in dem diese dem Ventilsitzring 9 des Einlaßventils 7 abgewendet ist, sowie der Bereich B der Oberfläche 5' des Einlaßkanals 5, in dem diese dem Ventilsitzring 9 des Einlaßventiles 7 zugewendet ist, eingezeichnet. Diese Bereiche A und B sind im Grundriß betrachtet, jeweils symmetrisch zur Kanalmittellinie 5'' des Einlaßkanals 5 angeordnet. Der Eintrittswinkel des Einlaßkanals 5 im Bereich A, gemessen beim Ventilsitzring 9, als Winkel zwischen der auf die Zylinderachse rechtwinkelig stehenden, einlaßseitigen Begrenzungsebene 9' des Ventilsitzringes 9 und der Tangente 13 auf die Oberfläche des Einlaßkanals 5, ist mit α bezeichnet. Der Eintrittswinkel des Einlaßkanals 5 im Bereich B, wieder gemessen beim Ventilsitzring 9, als Winkel zwischen der auf die Zylinderachse rechtwinkelig stehenden, einlaßseitigen Begrenzungsebene 9' des Ventilsitzringes 9 und der Tangente 14 auf die Oberfläche des Einlaßkanals 5, ist mit ß gekennzeichnet. Die Strömungsrichtung und die Menge des eintretenden Frischgases wird durch die Richtung und Länge der Pfeile S₁ und S₂ in Fig. 1 angedeutet. Sowohl der Bereich A als auch der Bereich B erstrecken sich über einen Winkel 11 bzw. 12 von etwa 90° bis 160°, wobei die Bereiche A und B auch unterschiedlich groß sein können. Mit 15 ist eine auf die Motorlängsebene 16 normal stehende Symetrieebene bezeichnet.

Die Erfindung eignet sich vorzüglich für die unterschiedlichsten Anordnungen und Anzahlen von Ein- und Auslaßventilen 9 bzw. 10.

Die erfindungsgemäße Ausführungsform nach Fig. 3 weist zwei Einlaßventile 7 und nur ein Auslaßventil 8 auf.

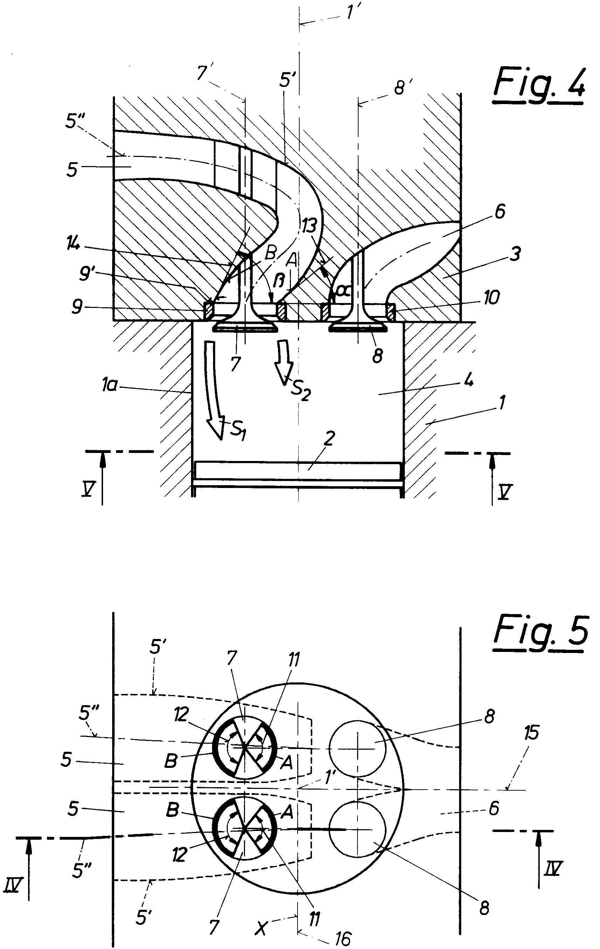

Bei dem Beispiel für eine andere Ausführungsform nach Fig. 4 und 5 sind die Flansche der Einlaßkanäle 5 und des Auslaßkanals 6 an gegenüberliegenden Seiten des Zylinderkopfes 3 angeordnet. Es gelten auch hier die Voraussetzungen wie bei der Ausführung nach Fig. 1 und 2; es liegen ähnliche Strömungsverhältnisse vor.

Versuche haben gezeigt, daß optimale Verhältnisse vorliegen, wenn der Eintrittswinkel α im Bereich A zwischen 20° und 45°, vorzugsweise bei 30°, und der Eintrittswinkel ß im Bereich B zwischen 50° und 70°, vorzugsweise bei 60°, liegt. Dadurch kann verhindert werden, daß das Frischgas auf kürzestem Wege den Brennraum durch das Auslaßventil verläßt.

## Patentansprüche

1. Zweitakt-Brennkraftmaschine mit zumindest einem parallel zur Zylinderachse (1') angeordneten Ein- und Auslaßventil (7 und 8) je Zylinder, mit den zugehörigen Ein- und Auslaßkanälen (5 und 6) im Zylinderkopf (3) und Brennraumspülung durch Frischgaszufuhr, wobei durch die Formgebung des Einlaßkanals (5) eine vom Auslaßventil (8) weg gerichtete Strömung im Brennraum (4) erzeugt wird und der Eintrittskanal (5) Bereiche unterschiedlicher Eintrittswinkel aufweist, **dadurch gekennzeichnet**, daß der Eintrittswinkel (ß) des Einlaßkanals (5) in einem der einlaßseitigen Begrenzungsebene (9') des Ventilsitzringes (9) zugewandten Bereich (B) der Oberfläche (5') des Einlaßkanals (5) in an sich bekannter Weise größer ist als der Eintrittswinkel (α) des Einlaßkanals (5) in einem der einlaßseitigen Begrenzungsebene (9') des Ventilsitzringes (9) abgewandten Bereich (A) der Oberfläche (5') des Einlaßkanals (5), beide Winkel gemessen beim Ventilsitzring (9) als Winkel zwischen der einlaßseitigen Begrenzungsebene (9') des Ventilsitzringes (9) und der Tangente (13 bzw. 14) auf die Oberfläche (5') des Einlaßkanals (5), wobei die Hauptströmungsrichtung (S₁) des Frischgases in Richtung zur Zylinderwand (1a) und von der Motorlängsebene (16) weg gelenkt wird.

2. Brennkraftmaschine nach Anspruch 1, dadurch gekennzeichnet, daß der Eintrittswinkel (α) des Einlaßkanals (5) in dem Bereich (A) der Oberfläche (5') des Einlaßkanals (5), in dem diese dem Ventilsitzring (9) abgewandt ist, zwischen 20° und 45°, vorzugsweise 30° beträgt, und der Eintrittswinkel (ß) des Einlaßkanals (5) in dem Bereich (B) der Oberfläche (5') des Einlaßkanals (5), in dem diese dem Ventilsitzring (9) des Einlaßventils zugewandt ist, zwischen 50° und 70°, vorzugsweise bei 60°, beträgt.

3. Brennkraftmaschine nach Anspruch 1 oder 2, **dadurch gekennzeichnet**, daß der Bereich (A) der Oberfläche (5') des Einlaßkanals (5), in dem diese dem Ventilsitzring (9) abgewandt ist, als auch der Bereich (B) der Oberfläche (5') des Einlaßkanals (5), in dem diese dem Ventilsitzring (9) des Einlaßventils zugewandt ist, beim Ventilsitzring (9) einen Winkel (11) um die Kanalmittellinie (5'') zwischen 90° und 160°, wobei die Bereiche (A) und (B) auch verschieden groß sein können.

4. Brennkraftmaschine nach einem der Ansprüche 1 bis 3, **dadurch gekennzeichnet**, daß der Übergang der Oberfläche (5') des Einlaßkanals (5) in jedem Bereich stetig verläuft.

5. Brennkraftmaschine nach einem der Ansprüche 1 bis 4 mit zwei Einlaßventilen je Zylinder, **dadurch gekennzeichnet**, daß die Bereiche (A und B) der Oberflächen (5') der Einlaßkanäle (5) zur Symmetrieebene (15), welche zwischen den Einlaßventilen (12) im rechten Winkel zur Motorlängsachse (x) verläuft, symmetrisch angeordnet sind.
